# DEMANDE DE BREVET EUROPEEN

(11) **EP 1 321 705 A2**
(43) Date de publication de la demande: **25.06.2003**
(21) Numéro de dépôt: 02293084.6
(22) Date de dépôt: 13.12.2002
(51) Int. Cl.: F16P 3/08

(54) **Barriere ou ecran de securite anti-fraude**

(30) Priorité: 21.12.2001 FR 0116690
(71) Demandeur: Coutier Industrie, 57100 Thionville (FR)
(72) Inventeur: Coutier, Charles, 57570 Cattenom (FR)
(74) Mandataire: Robert, Jean-Pierre

(57) **Abrégé**

Barrière ou écran de sécurité comportant deux éléments (1, 2) mobiles l'un par rapport à l'autre entre une position de fermeture (F) dans laquelle les éléments sont rapprochés et une pluralité de positions d'ouverture (Om,OM) dans chacune desquelles les éléments sont plus éloignés l'un de l'autre que dans la position de fermeture (F) et un détecteur formé d'un capteur (3) solidaire d'un élément (1) et d'une clé (4) solidaire de l'autre élément (2), l'état de la sortie du détecteur étant fonction de la présence ou de l'absence de la clé (4) dans la zone de sensibilité du capteur (3), le volume balayé par la clé (4) entre la position de fermeture (F) et la plus extrême des positions d'ouverture (OM) étant capoté (6) de manière inviolable.

## Description

La présente invention concerne les barrières, les écrans, les capots ouvrants mobiles de sécurité...

Dans de nombreux domaines, deux éléments de machine, de clôture, d'enceinte de protection, ont deux positions relatives possibles, à savoir une position rapprochée dans laquelle ils forment une barrière de protection isolant une zone de l'espace d'une autre zone de cet espace, permettant qu'un processus dangereux ou risqué puisse se dérouler dans une zone tout en garantissant l'empêchement de toute pénétration dans cette zone pendant son déroulement et, une position éloignée dans laquelle les deux zones de l'espace ne sont plus isolées l'une de l'autre. Il faut que, dans cette deuxième position relative des éléments, le risque ou le danger pouvant exister dans l'une des zones, ait cessé ou disparu. Dans de nombreux cas ce risque ou ce danger tient à des pièces ou des machines en mouvement et sa disparition naît de l'arrêt de ces machines.

Aussi l'une des manières simples de faire cesser le danger est de réaliser la coupure de l'alimentation des moteurs des machines en mouvement, au moment même où les deux éléments de barrière cessent d'être dans leur position rapprochée. L'un des moyens usuellement employé pour relier le mouvement relatif des éléments à une coupure électrique est un contacteur de sécurité qui comporte deux parties, chacune solidaire d'un élément de barrière, coopérant l'une avec l'autre lorsque les éléments sont rapprochés pour établir un contact, actionner un émetteur ou un générateur de signal... et en général tout moyen d'autorisation de la mise en fonctionnement des pièces ou machines dangereuses. Ces deux parties peuvent en plus participer au verrouillage mécanique des deux éléments dans leur première position ; il convient alors de déverrouiller (au moyen d'une autorisation ce qui crée un degré de sécurisation supplémentaire) les deux éléments avant de pouvoir les éloigner l'un de l'autre.

Ces contacteurs de sécurité conviennent parfaitement à des conditions normales d'utilisation. Leur principal inconvénient réside cependant dans le fait que l'on peut les leurrer aisément, c'est-à-dire placer l'installation de sécurité dans un état où elle considère que l'isolation de la zone de l'espace à risque est réalisée, que le processus dangereux peut être relancé alors qu'il n'en est rien, car par une intervention humaine volontaire (assimilable à une fraude) l'une des parties du contacteur de sécurité a été associée à une réplique de l'autre, dissociée de l'élément de barrière dont elle est normalement solidaire. Il n'existe en outre aucune trace de cette intervention frauduleuse permettant une recherche de responsabilité.

Par les moyens conformes à l'invention on parvient, de manière simple et économique d'une part, à réduire considérablement les possibilités d'une telle fraude et d'autre part, et si elle se produit néanmoins, à laisser subsister des traces qui marqueront l'action volontaire sur la base desquelles la responsabilité civile et pénale en cas d'accident du chef d'entreprise pourra être écartée.

A cet effet l'invention a donc pour objet une barrière ou un écran de sécurité comportant deux éléments mobiles l'un par rapport à l'autre entre une position de fermeture dans laquelle les éléments sont rapprochés et une pluralité de positions d'ouverture dans chacune desquelles les éléments sont plus éloignés l'un de l'autre que dans la position de fermeture et un détecteur formé d'un capteur solidaire d'un élément et d'une clé solidaire de l'autre élément, l'état de la sortie du détecteur étant fonction de la présence ou de l'absence de la clé dans la zone de sensibilité du capteur.

Selon la caractéristique principale de l'invention, le volume balayé par la clé entre la position de fermeture des deux éléments et la plus extrême des positions d'ouverture est capotée de manière inviolable. Il est alors constitué un obstacle qui interdit, sauf destruction ou démontage, de présenter dans la zone de sensibilité des capteurs, un leurre de la clé. Il faut entendre par volume balayé par la clé le volume attaché à un repère solidaire de l'élément de barrière comportant le capteur. Si cet élément est fixe le volume balayé est fixe. A l'inverse, si le capteur est mobile avec l'élément qui le porte, le volume est également mobile par rapport à une clé fixe.

Dans un mode de réalisation de l'invention, les moyens de capotage du volume susdit sont formés par une enceinte tubulaire pourvue d'une ouverture longitudinale pour le passage d'une pièce d'attachement de la clé à l'élément de barrière qui la porte.

Cette ouverture longitudinale comporte des moyens qui interdisent de faire pénétrer dans le volume capoté un leurre de la clé. De manière simple, ces moyens résident dans la forme de l'ouverture longitudinale qui présente en section une chicane empêchant l'introduction de ce leurre.

D'autres caractéristiques et avantages de l'invention ressortiront de la description de quelques exemples de sa réalisation donnés ci-après à titre indicatif.

Il sera fait référence aux dessins annexés parmi lesquels :
- la figure 1 est une vue schématique d'une barrière de sécurité équipée des éléments d'inviolabilité selon l'invention,
- la figure 2 est une coupe d'une installation selon l'invention dans laquelle la barrière de sécurité est un capot coulissant d'une enceinte ou d'une machine,
- la figure 3 illustre l'application des moyens de l'invention à une porte d'accès ménagée dans une clôture de protection,
- la figure 4 enfin illustre par une coupe schématique un agencement des moyens pouvant être mis en oeuvre dans l'installation sur la figure 3.

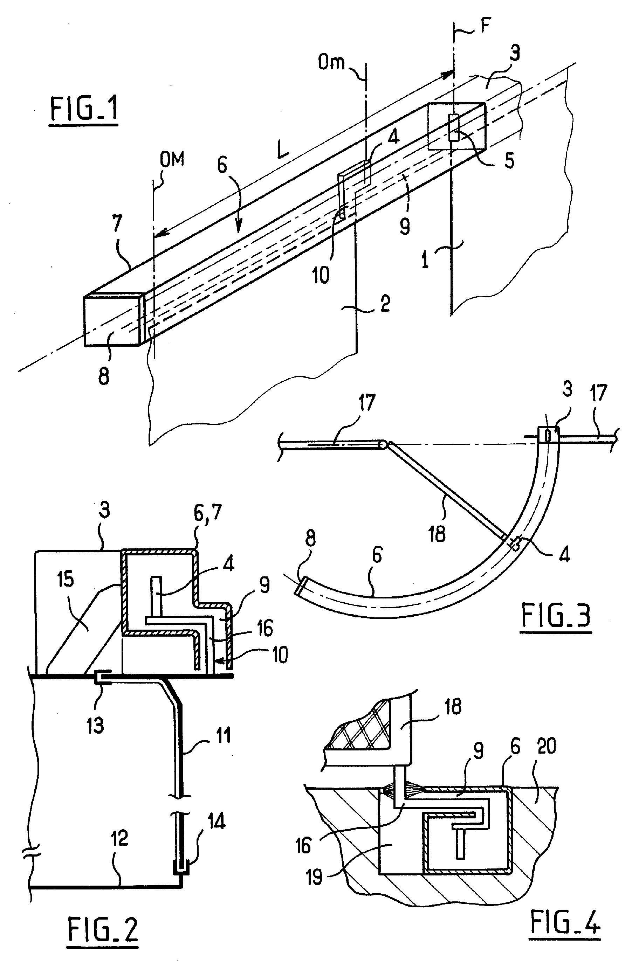

A la figure 1 on a représenté un panneau 1 formant un premier élément de barrière, par exemple fixe et un panneau 2 représentant un deuxième élément de barrière, par exemple mobile et coulissant sensiblement parallèlement au panneau 1 en direction de ce dernier ou en éloignement. Le panneau 1 est pourvu d'un capteur 3 connu en lui-même et raccordé à tout dispositif d'exploitation du signal qu'il est capable d'engendrer lorsqu'une clé 4, portée par le panneau 2, est présente ou absente de sa zone de détection ou de sensibilité. Dans le cas d'espèce, la clé 4 réside en une languette qui, lorsque le panneau 2 est rapproché du panneau 1, pénètre à l'intérieur du boîtier du capteur 3 par une ouverture 5, pour actionner mécaniquement des contacts électriques que ce boîtier contient.

On a indiqué sur cette figure par L l'amplitude maximale du débattement du panneau 2 par rapport au panneau 1. Lorsque le bord du panneau 2 en regard du panneau 1 lui est adjacent, la barrière de sécurité est fermée et la clé 4 est logée dans la fente 5 du capteur 3. Il s'agit de la position F de fermeture de la barrière. Lorsque le panneau 2 est éloigné au maximum du panneau 1, la clé 4 se trouve au voisinage de l'axe OM de la figure. Il s'agit de la position d'ouverture extrême de la barrière alors que Om indique toute position d'ouverture entre la position de fermeture et la position d'ouverture extrême.

Entre la position F et la position OM, la clé 4 décrit une trajectoire ici linéaire rectiligne et balaye un volume le long de cette trajectoire qui, selon l'invention, est entièrement capoté par une enceinte 6. Dans le cas de la figure 1, cette enceinte 6 est formée d'un tube 7 en une ou plusieurs pièces qui, à une extrémité, entoure complètement la fente 5 du capteur 3 en étant au contact avec le boîtier de ce dernier et qui, à son autre extrémité, est pourvue d'un bouchon 8 fixé de manière indémontable au tube 7. Ce tube possède une fente inférieure 9 qui forme une ouverture longitudinale permettant à une partie de liaison 10 de la clé 4 au panneau 2 de traverser la paroi de l'enceinte 6.

L'ouverture 9 comporte des moyens qui interdisent à tout leurre d'être introduit à l'intérieur de l'enceinte 6. Les modes de réalisation de ces moyens seront décrits en regard des figures 2 et 4.

A la figure 2 on a représenté une application de l'invention au capot coulissant 11 d'une enceinte ou d'une machine dont le bâti 12 porte les glissières 13 et 14 du capot 11. La direction de coulissement est perpendiculaire au plan de la figure. L'enceinte tubulaire 7 est fixée par tout moyen 15 au bâti 12 qui porte également de manière fixe le détecteur 3. La clé 4 est quant à elle reliée au capot 11 par une partie 10 en forme de bras coudé 16 afin que ce bras puisse librement coulisser dans la forme en chicane de la fente 9 d'accès à l'enceinte 6. On comprend que cette chicane constitue un obstacle pour l'introduction par la fente 9 d'un leurre de la clé 4 à l'intérieur de l'enceinte 6. La clé 4 et le bras 16 attachés au capot 11 sont introduits dans l'enceinte 6 par l'extrémité qui sera ultérieurement bouchée de manière indémontable par le bouchon 8.

La figure 3 est une vue schématique de dessus d'une barrière de sécurité possédant une structure fixe 17 et une porte 18 ménagée dans cette structure fixe formant le panneau mobile fonctionnellement identique au panneau 2 de la figure 1. On voit sur cette figure que la clé 4 portée par le panneau 18 articulé sur la barrière 17 décrit un trajet curviligne de sorte que le volume balayé par cette clé est enfermé dans une enceinte 6 également curviligne.

Comme il serait inesthétique et peut-être encombrant d'installer l'enceinte 6 en partie supérieure de la barrière de sécurité, la figure 4 montre que l'on peut réaliser cette enceinte dans une saignée 19 du sol 20 de l'espace qui comporte cette barrière de sécurité. L'enceinte 6 est ici également tubulaire avec une ouverture 9 qui, vue en section, forme une chicane dont le profil est suivi par le bras 16 coudé de liaison de la clé 4 avec la porte 18. Comme dans le cas précédent, la clé 4 est logée dans l'enceinte 6 au moment de l'équipement de la barrière de sécurité des moyens d'inviolabilité de l'invention et ne peut en être extraite que par démontage, désoudage.... Dans une variante de réalisation non représentée d'un panneau pivotant, il peut être avantageux de prévoir le panneau 18 qui s'étend au-delà de son articulation à la barrière 17, la clé 4 et le capteur 3 étant situés à l'extrémité de la prolongation du panneau 18 et l'enceinte 6 dans une région diamétralement opposée à celle représentée à la figure 3 et sur un rayon plus court.

Le capteur 3 et la clé 4 ont été représentés schématiquement car ils sont bien connus de l'homme du métier puisque présent usuellement sur le marché.

L'invention s'applique également à toute installation qui met en oeuvre des capteurs de proximité avec ou sans contact de géométrie différente de celle impliquant la pénétration d'une clé dans un boîtier.

## Revendications

1. Barrière ou écran de sécurité comportant deux éléments (1, 2) mobiles l'un par rapport à l'autre entre une position de fermeture (F) dans laquelle les éléments sont rapprochés et une pluralité de positions d'ouverture (Om,OM) dans chacune desquelles les éléments sont plus éloignés l'un de l'autre que dans la position de fermeture et un détecteur formé d'un capteur (3) solidaire d'un élément (1) et d'une clé (4) solidaire de l'autre élément (2), l'état de la sortie du détecteur étant fonction de la présence ou de l'absence de la clé (4) dans la zone de sensibilité du capteur (3), le volume balayé par la clé (4) entre la position de fermeture (F) et la plus extrême des positions d'ouverture (Om,OM) étant capoté (6) de manière inviolable par des moyens de capotage, **caractérisé en ce que** les moyens de capotage sont formés par une enceinte tubulaire (7) pourvue d'une ouverture longitudinale (9) pour le passage d'une pièce d'attachement (10) de la clé (4) à l'élément de barrière (2) qui la porte, l'ouverture longitudinale (9) présentant en section une chicane empêchant l'introduction d'un leurre de la clé.
